Europäisches Patentamt

European Patent Office

Office européen des brevets

(11) Veröffentlichungsnummer: **0 244 731**
**B1**

(12) **EUROPÄISCHE PATENTSCHRIFT**

(45) Veröffentlichungstag der Patentschrift:
27.09.89

(51) Int. Cl.⁴: **B 60 P 7/13**

(21) Anmeldenummer: 87106099.2

(22) Anmeldetag: 27.04.87

(54) **Anordnung zum Arretieren einer Ladeeinheit.**

(30) Priorität: 06.05.86 DE 3615354

(43) Veröffentlichungstag der Anmeldung:
11.11.87 Patentblatt 87/46

(45) Bekanntmachung des Hinweises auf die Patenterteilung:
27.09.89 Patentblatt 89/39

(84) Benannte Vertragsstaaten:
AT BE CH DE ES FR GB IT LI NL SE

(56) Entgegenhaltungen:
FR-A- 2 529 519
US-A- 3 159 111

(73) Patentinhaber: Westerwälder Eisenwerk Gerhard GmbH,
Ringstrasse Postfach 20, D-5241 Weitefeld/Sieg (DE)

(72) Erfinder: Gerhard, Helmut, Im Schlossteinchen 31,
D-5241 Weitefeld (DE)

(74) Vertreter: Strehl, Schübel-Hopf, Groening, Schulz,
Maximilianstrasse 54 Postfach 22 14 55,
D-8000 München 22 (DE)

## Beschreibung

Die Erfindung betrifft eine Anordnung zum Arretieren einer Ladeeinheit, d. h. eines Containers oder einer Transportplattform, an einem Arretierungselement mittels einer Riegelplatte, gemäss dem ersten Teil des Patentanspruchs 1.

Eine derartige Anordnung gehört gemäss der nicht vorveröffentlichten EP-A2-0 189 054 zum Stand der Technik. Dort ist die Riegelplatte in Längsrichtung eines unteren Container-Rahmenelementes verschiebbar und tritt im Bereich eines Eckbeschlags nach aussen. Im arretierten Zustand liegt dabei ebenso wie bei herkömmlichen Verriegelungen der Arretierungspunkt in der Nähe der vorderen bzw. hinteren Containerkante. Um bei Auftreten von Vertikalbeschleunigungen, die insbesondere bei Strassenfahrzeugen zu berücksichtigen sind, die Gefahr eines Kippens um die betreffende vordere oder hintere Containerkante zu vermeiden, sind über die Arretierung an zwei ISO-Drehschlössern hinaus zusätzliche Befestigungsmassnahmen erforderlich.

Der Erfindung liegt die Aufgabe zugrunde, eine Anordnung zu schaffen, mit der sich mittelgrosse Ladeeinheiten jeweils an lediglich zwei Punkten derart arretieren lässt, dass auch bei Vertikalbeschleunigungen keine Kippgefahr auftritt.

Die erfindungsgemässe Lösung dieser Aufgabe ist im Patentanspruch 1 angegeben. Danach greift die Riegelplatte zur Fixierung an dem betreffenden Arretierungselement in eine Gabelstapleröffnung ein, die seitlich an der Ladeeinheit in Abstand von den beiden Ecken angeordnet ist. Riegelplatte und Öffnung sind dabei so aufeinander abgestimmt, dass die Riegelplatte mit einem breiteren Teil an der Aussen- oder Innenfläche der Öffnung anstösst. Da gleiche Verriegelungen an beiden in Längsrichtung verlaufenden unteren Rahmenelementen der Ladeeinheit vorgesehen sind, wird diese in Querrichtung arretiert. Da ferner zum Eingriff der Riegelplatte die bei Containern und Plattformen regelmässig vorhandenen Gabelstapleröffnungen herangezogen werden, lassen sich übliche Ladeeinheiten auch ohne besondere Vorkehrungen mit Hilfe der Riegelplatte arretieren. Dabei liegt jeweils ein Teil der Ladeeinheit vor und hinter dem Arretierungspunkt, so dass diese gegen Kippen sowohl um ihre vordere als auch um ihre hintere untere Kante gesichert ist. Die Riegelplatte kann einfach geformt und in ihrer Herstellung unaufwendig und gleichzeitig im Betrieb einfach zu handhaben sein.

Vorteilhafte Ausgestaltungen der Erfindung sind in den Unteransprüchen gekennzeichnet. Die Gestaltung nach Anspruch 2 ergibt eine noch bessere Sicherung der Ladeeinheit bereits an einer Riegelplatte, die in diesem Fall die Aussenwand der Gabelstapleröffnung hintergreift und nur durch eine Hubbewegung, bei der es sich um eine rein translatorische oder auch um eine Schwenkbewegung handeln kann, aus der Öffnung lösbar ist.

Die Weiterbildungen nach den Ansprüchen 3 bis 5 betreffen bevorzugte einfache und für die Handhabung günstige Gestaltungen der Riegelplatte. Anspruch 6 bezieht sich auf eine zweckmässige Anordnung der mit der Riegelplatte zusammenarbeitenden Öffnung, Ansprüche 7 und 8 auf vorteilhafte Formgebungen dieser Öffnung zur Erzielung einer sicheren Verankerung. Die Weiterbildung nach Anspruch 9 führt zu einer besonders einfachen Gestaltung und Handhabung der Riegelplatte.

Bevorzugte Ausführungsbeispiele der Erfindung werden nachstehend anhand der Zeichnungen näher erläutert. In der Zeichnungen zeigt:

Fig. 1 eine perspektivische Darstellung eines an einem Arretierungselement fixierten mittelgrossen Containers,

Fig. 2 eine Teilansicht eines unteren Rahmenelements des Containers nach Fig. 1 mit eingesetzter und mittels eines Drehschlosses arretierter Riegelplatte,

Fig. 3 und 4 andere Ausgestaltungen der Riegelplatte,

Fig. 5 ein anderes Ausführungsbeispiel für das Container-Rahmenelement und die darin vorgesehene Gabelstapleröffnung zur Aufnahme der Riegelplatte, und

Fig. 6 eine wieder andere Gestaltung der Riegelplatte in Eingriff mit einer Gabelstapleröffnung.

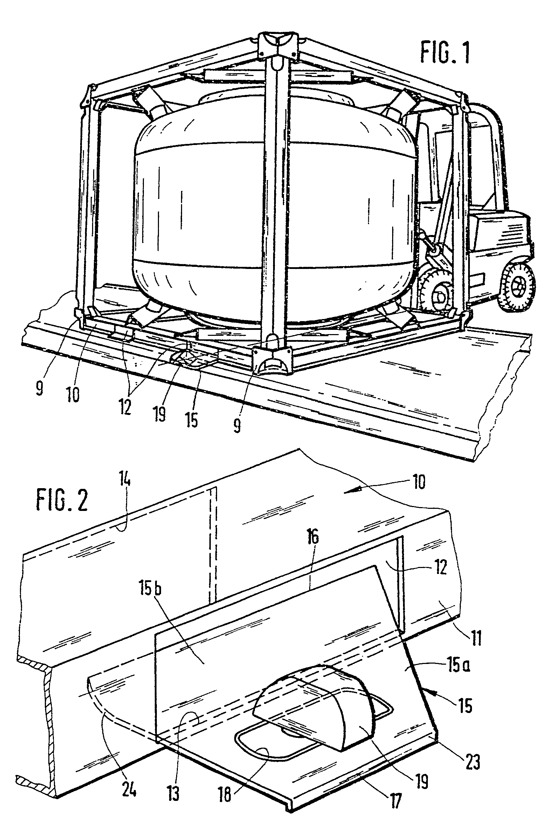

Der in Fig. 1 gezeigte Container weist einen Rahmen auf, dessen verschiedene Rahmenelemente an Eckbeschlägen miteinander verbunden sind. Die in Längsrichtung der in Fig. 1 angedeuteten Ladefläche verlaufenden unteren Rahmenelemente 10 sind zwischen den Eckbeschlägen 9 von zwei Gabelstaplerbahnen durchbrochen, deren eine zur Fixierung des Containers an Arretierungselementen, wie sie auf der Ladefläche von Fahrzeugen zum Transport von ISO- und Landgrosscontainern vorgesehen sind, herangezogen wird.

In Fig. 2 ist in perspektivischer Ansicht ein Teil des unteren Rahmenelements 10 gezeigt. Die vom Container abgewandte äussere Wand 11 ist mit einer rechteckigen Öffnung 12 versehen, deren grössere Länge in Längsrichtung des Rahmenelements verläuft. In diesem Ausführungsbeispiel besteht das Rahmenelement 10 aus einem Vierkantrohr, wobei mit der Öffnung 12 in der Wand 11 eine gleich grosse Öffnung 14 in der gegenüberliegenden inneren senkrechten Wand fluchtet; die beiden Öffnungen 12 und 14 bilden eine Tasche zur Einführung von Gabelstaplerzinken. In diesem Fall ist aus statischen Gründen der obere Flansch des Rahmenelements 10 im Bereich der Öffnungen 12 und 14 mit einer (nicht gezeigten) Verstärkungsplatte versehen.

In die Öffnung 12 des Rahmenelements 10 ist eine Riegelplatte 15 eingelegt, die gemäss Fig. 2 trapezförmig gestaltet ist, wobei die hintere Kante 16 der Riegelplatte 15 länger ist als die vordere Kante 17 und länger als die untere Kante 13 der Öffnung 12. Der aus der Öffnung 12 herausragende Teil 15a der Riegelplatte 15 weist eine längliche Aussparung 18 auf, in die ein zur Sicherung von Grosscontainern vorgesehenes Drehschloss 19 eingreift. In Fig. 2 ist das Drehschloss 19 in seiner verriegelten Stellung gezeigt. An ihrer vorderen Kante 17 ist die Riegelplatte 15 mit einem nach unten abgewinkelten Steg 23 versehen, dessen Höhe gleich dem Abstand zwischen der unteren Kante 13 der Öffnung 12 und der Ladefläche des Fahrzeugs ist.

Beim Betrieb wird nach dem Aufsetzen des Containers auf die Ladefläche die Riegelplatte 15 mit ihrem hinteren Teil 15b in die Öffnung 12 eingefügt, wobei die Riegelplatte 15 mit ihrer hinteren Kante 16 auf die Diagonale der Öffnung 12 ausgerichtet wird, deren Länge etwas grösser ist als die grösste Breite des inneren Teils 15b der Riegelplatte 15. Zum leichteren Einführen bei trotzdem sicherer Verankerung ist die Riegelplatte 15 in ihrem in die Öffnung 12 eingreifenden Teil 15b bei 24 gerundet. Dadurch lässt sie sich zunächst mit ihrer in Fig. 2 rechten hinteren Spitze in die Öffnung 12 einführen und dann in diagonaler Ausrichtung mit dem gerundeten Teil eindrehen. Sodann wird die Riegelplatte 15 gesenkt, bis sie auf der unteren Kante 13 der Öffnung 12 aufliegt. Dabei wird die Aussparung 18 über das Drehschloss 19 hinweggeführt, das sich zunächst in einer gegenüber der Darstellung nach Fig. 2 um 90° gedrehten Stellung befindet. Durch Drehen des Drehschlosses 19 in die Stellung nach Fig. 2 wird dann die Riegelplatte 15 gegenüber der unteren Kante 13 der Öffnung und mit ihrem Steg 23 gegenüber der Ladefläche verspannt, wodurch der Container arretiert ist.

Da die Gabelstaplertasche in dem in Längsrichtung verlaufenden unteren Container-Rahmenelement 10 zwischen den beiden Eckbeschlägen 9 angeordnet ist, verhindert die beschriebene Art der Verriegelung ein Kippen des Containers um seine vordere und seine hintere Kante. Dadurch, dass in üblicher Weise auch an dem gegenüberliegenden, in Längsrichtung verlaufenden Rahmenelement des Containers eine der Fig. 2 entsprechende Verriegelung vorgenommen wird, ist der Container auch gegen Kippen um jede Längsachse gesichert.

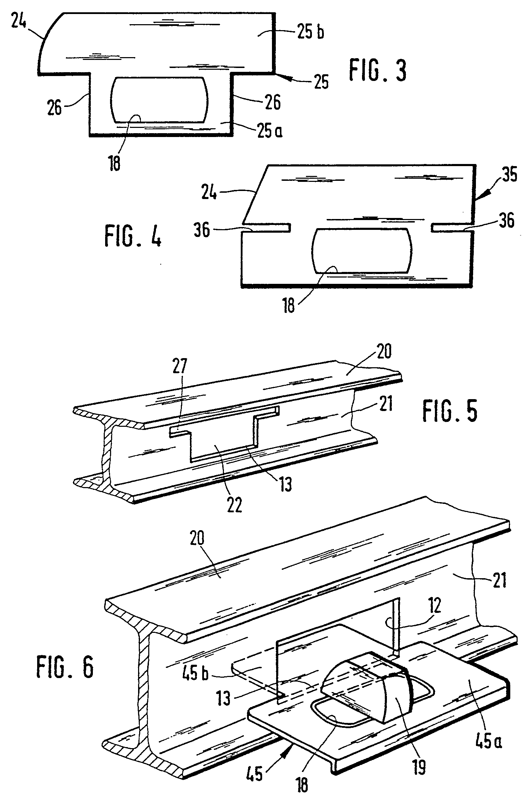

In der alternativen Ausgestaltung nach Fig. 3 ist der aus der Öffnung 12 des Container-Rahmenelements 10 herausragende Teil 25a der Riegelplatte 25 gegenüber dem in die Öffnung eingreifenden Teil 25b durch seitliche Einschnitte 26 abgesetzt. Beide Teile der Riegelplatte können in diesem Fall rechteckig sein, wobei der aus der Öffnung herausragende und mit der Aussparung 18 versehene Teil 25a etwas kürzer ist als die untere Kante 13 der Öffnung 12, während der andere Teil 15b länger ist als diese Kante 13 aber etwas kürzer als das Diagonalmass der Öffnung 12. Zum leichteren Eindrehen in die Öffnung 12 ist auch die Riegelplatte 25 nach Fig. 3 an ihrem inneren Teil 25b bei 24 abgerundet.

Die in Fig. 4 gezeigte Riegelplatte 35 unterscheidet sich von der Riegelplatte 25 nach Fig. 3 dadurch, dass die seitlichen Einschnitte als Schlitze 36 ausgebildet sind.

Fig. 5 zeigt ein Container-Rahmenelement 20 in Form eines I-Trägers, wobei eine die Gabelstaplerbahn bildende Öffnung 22 im Mittelsteg 21 angeordnet ist. Zum Unterschied von Fig. 2 weist die Öffnung 22 an ihre oberen Kante einen über deren Länge hinausgehenden Schlitz 27 auf. In diesem Fall lässt sich die Riegelplatte 15, 25 bzw. 35 mit ihrem breiteren hinteren Teil horizontal durch den Schlitz 27 hindurchführen und dann senkrecht nach unten absenken.

In der Variante nach Fig. 6 weist die Riegelplatte 45 einen breiteren äusseren Teil 45a auf, der mit der Öffnung 18 zum Eingriff des Drehschlosses 19 versehen ist, sowie einen schmäleren, geraden Teil 45b zum Eingriff in die Öffnung 12. Der Teil 45b ist etwas schmäler, der Teil 45a dagegen breiter als die Öffnung 12. In diesem Fall ist der Container gegen Verschieben in Richtung auf das Drehschloss 19 zu gesichert. Da Gabelstapleröffnungen 12 üblicherweise an beiden unteren, in Längsrichtung verlaufenden Container-Rahmenelementen 20 an einander entsprechenden Stellen vorgesehen sind, lässt sich die gleiche Verriegelung, wie sie in Fig. 6 gezeigt ist, auch auf der gegenüberliegenden Seite des Containers vornehmen, so dass dann der Container ebenso wie bei der Ausführungsform nach Fig. 2 sowohl gegen ein Verschieben in beiden Querrichtungen als auch gegen Kippen um jede Querachse gesichert ist.

## Patentansprüche

1. Anordnung zum Arretieren einer Ladeeinheit an einem Arretierungselement (19) mittels einer Riegelplatte (15), die einen ersten Teil (15b) zum Eingriff in eine im unteren Bereich der Ladeeinheit vorgesehene Öffnung (12) und in ihrem aus dieser Öffnung (12) herausragenden zweiten Teil (15a) eine Aussparung (18) zum Eingriff mit dem Arretierungselement (19) aufweist, dadurch gekennzeichnet, dass die Öffnung (12) Teil einer ein seitliches unteres Rahmenelement (10) der Ladeeinheit in Abstand von deren beiden Ecken (9) durchsetzenden Gabelstaplerbahn ist, und dass einer der beiden Teile (15a, 15b) der Riegelplatte (15) in Längsrichtung des Rahmenelements (10) länger ist als die untere Kante (13) der Öffnung (12).

2. Anordnung nach Anspruch 1, dadurch gekennzeichnet, dass der erste Teil (15b) der Riegelplatte (15) in Längsrichtung des Rahmenelements (10) länger ist als die untere Kante (13) der Öffnung (12), und dass Öffnung (12) und Riegelplatte (15) derart gestaltet sind, dass die Riegelplatte (15) aus ihrer Verriegelungsstellung, in der sie im wesentlichen parallel zu der von der Ladeeinheit definierten Bodenebene verläuft, durch eine Hubbewegung relativ zu der Öffnung (12) lösbar ist.

3. Anordnung nach Anspruch 2, dadurch gekennzeichnet, dass die Riegelplatte (15) trapezförmig ist.

4. Anordnung nach Anspruch 2, dadurch gekennzeichnet, dass der zweite Teil (25a) der Riegelplatte (25, 35) durch seitliche Einschnitte (26, 36) von dem ersten Teil (25b) abgesetzt ist.

5. Anordnung nach einem der Ansprüche 2 bis 4, dadurch gekennzeichnet, dass der erste Teil (15b) der Riegelplatte (15) an einer Seite abgeschrägt oder abgerundet (24) ist.

6. Anordnung nach einem der Ansprüche 2 bis 5, dadurch gekennzeichnet, dass die Öffnung (12, 22) im Mittelsteg (21) eines I-Profil-Trägers (20) ausgebildet ist.

7. Anordnung nach einem der Ansprüche 2 bis 6, dadurch gekennzeichnet, dass die obere Kante der Öffnung (22) von einem Schlitz (27) gebildet ist, dessen Länge in Längsrichtung des Rahmenelements (20) über die Breite der Öffnung (22) hinausgeht.

8. Anordnung nach einem der Ansprüche 2 bis 6, dadurch gekennzeichnet, dass das lichte Diagonalmass der Öffnung (12) grösser ist als die grösste Breite der Riegelplatte (15).

9. Anordnung nach Anspruch 1, dadurch gekennzeichnet, dass der erste Teil (45b) der Riegelplatte (45) in Längsrichtung des Rahmenelements (20) kürzer und ihr zweiter Teil (45a) länger ist als die untere Kante (13) der Öffnung (12).

## Claims

1. An arrangement for locking a unit load to a locking element (19) by means of a locking plate (15) which has a first portion (15b) for engagement in an opening (12) provided in the lower area of the unit load, and an aperture (18) for engagement with the locking element (19) in its second portion (15a) projecting from said opening (12), characterised in that the opening (12) is part of a fork-lift channel extending through a lateral lower frame member (10) of the unit load at a position spaced from the two corners (9) thereof, and that one of the two portions (15a, 15b) of the locking plate (15) is longer in the longitudinal direction of the frame member (10) than the lower edge (13) of the opening (12).

2. The arrangement of claim 1, characterized in that the first portion (15b) of the locking plate (15) is longer in the longitudinal direction of the frame member (10) than the lower edge (13) of the opening (12), and that the opening (12) and locking plate (15) are shaped such that the locking plate (15) is adapted to be released from its locking position, in which it extends substantially parallel to the bottom plane defined by the unit load, by being lifted relative to the opening (12).

3. The arrangement of claim 2, characterised in that the locking plate (15) has a trapezoidal shape.

4. The arrangement of claim 2, characterized in that the second portion (25a) of the locking plate (25, 35) is set off from the first portion (25b) by lateral cut-outs (26, 36).

5. The arrangement of any of claims 2 to 4, characterized in that the first portion (15b) of the locking plate (15) is chamfered or rounded off (24) on one side.

6. The arrangement of any of claims 2 to 5, characterized in that the opening (12, 22) is formed in the central web (21) of an I-section beam (20).

7. The arrangement of any of claims 2 to 6, characterized in that the upper edge of the opening (22) is formed by a slot (27) the length of which in the longitudinal direction of the frame member (20) exceeds the width of the opening (22).

8. The arrangement of any of claims 2 to 6, characterized in that the interior diagonal dimension of the opening (12) is larger than the maximum width of the locking plate (15).

9. The arrangement of claim 1, characterized in that the first portion (45b) of the locking plate (45) in the longitudinal direction of the frame member (20) is shorter, and its second portion (45a) is longer, than the lower edge (13) of the opening (12).

## Revendications

1. Dispositif pour fixer une unité de chargement sur un élément de blocage (19) au moyen d'une plaque de verrouillage (15) qui comporte un premier élément (15b) pour l'engagement dans une ouverture (12) prévue dans la région inférieure de l'unité de chargement et, dans le second élément (15a) dépassant de ladite ouverture (12), un évidement (18) destiné à coopérer avec l'élément de blocage (19), caractérisé en ce que l'ouverture (12) fait partie d'une trajectoire de gerbeuse à fourche qui traverse un élément de cadre (10) latéral inférieur de l'unité de chargement, à distance des deux coins (9) de celle-ci, et que, dans le sens longitudinal de l'élément de cadre (10), l'un des deux éléments (15a, 15b) de la plaque de verrouillage (15) est plus long que le bord inférieur (13) de l'ouverture (12).

2. Dispositif selon la revendication 1, caractérisé en ce que, dans le sens longitudinal de l'élément de cadre (10), le premier élément (15b) de la plaque de verrouillage (15) est plus long que le bord inférieur (13) de l'ouverture (12) et que l'ouverture (12) et la plaque de verrouillage (15) sont conformées de telle façon que la plaque de verrouillage (15) peut être dégagée de sa position de verrouillage dans laquelle elle s'étend sensiblement parallèlement au plan du fond défini par l'unité de chargement, par un mouvement de levage par rapport à l'ouverture (12).

3. Dispositif selon la revendication 2, caractérisé en ce que la plaque de verrouillage (15) présente une forme trapézoïdale.

4. Dispositif selon la revendication 2, caractérisé en ce que le second élément (25a) de la plaque de verrouillage (25, 35) est séparé du premier élément (25b) par des incisions latérales (26, 36).

5. Dispositif selon l'une des revendications 2 à 4, caractérisé en ce que le premier élément (15b) de la plaque de verrouillage (15) est chanfreiné ou arrondi (24) sur l'un des côtés.

6. Dispositif selon l'une des revendications 2 à 5, caractérisé en ce que l'ouverture (12, 22) est formée dans l'âme (21) d'une poutre à section en double T (20).

7. Dispositif selon l'une des revendications 2 à 6, caractérisé en ce que le bord supérieur de l'ouverture (22) est formé par une fente (27) dont la longueur dans le sens longitudinal de l'élément de cadre (20) va au-delà de la largeur de l'ouverture (22).

8. Dispositif selon l'une des revendications 2 à 5, caractérisé en ce que la cote diagonale intérieure de l'ouverture (12) est supérieure à la largeur maximale de la plaque de verrouillage (15).

9. Dispositif selon la revendication 1, caractérisé en ce que, dans le sens longitudinal de l'élément de cadre (20), le premier élément (45b) de la plaque de verrouillage (45) est plus court, et son second élément (45a) plus long que le bord inférieur (13) de l'ouverture (12).

FIG.1

FIG.2

FIG. 3

FIG. 4

FIG. 5

FIG. 6